# EUROPÄISCHE PATENTSCHRIFT

(11) **EP 3 658 786 B1**
(45) Veröffentlichungstag und Bekanntmachung des Hinweises auf die Patenterteilung: **07.09.2022**
(21) Anmeldenummer: 18742760.4
(22) Anmeldetag: 13.07.2018
(51) Int. Cl.: F16B 5/00

(54) **BEFESTIGUNGSELEMENT, EINBAUELEMENT FÜR FAHRZEUGE UND FAHRZEUG**
FASTENING ELEMENT, INSTALLATION ELEMENT FOR VEHICLES, AND VEHICLE
ÉLÉMENT DE FIXATION, ÉLÉMENT DE MONTAGE POUR VÉHICULES ET VÉHICULE

(30) Priorität: 28.07.2017 DE 102017213039
(43) Veröffentlichungstag der Anmeldung: 03.06.2020
(60) Teilanmeldung: 21154986.0
(73) Patentinhaber: Adolf Würth GmbH & Co. KG, 74653 Künzelsau (DE); Würth International AG, 7000 Chur (CH)
(72) Erfinder: HOHL, Wolfgang, 74653 Künzelsau (DE); STARKE, Johannes, 74248 Ellhofen (DE)
(74) Vertreter: Patentanwälte Ruff, Wilhelm, Beier, Dauster & Partner mbB
(86) Internationale Anmeldenummer: PCT/EP2018/069084
(87) Internationale Veröffentlichungsnummer: WO 2019/020401

(56) Entgegenhaltungen:
- WO-A1-2011/008154
- WO-A1-2014/041241
- US-A1- 2005 012 319
- US-A1- 2013 334 828

## Beschreibung

Die Erfindung betrifft ein Befestigungselement zum Befestigen von Einbauelementen in Fahrzeugen, insbesondere Regale oder Schränke, wobei das Befestigungselement ein erstes Befestigungsende, ein zweites Befestigungsende und einen Verbindungsabschnitt zwischen dem ersten und dem zweiten Befestigungsende aufweist. Die Erfindung betrifft auch ein Einbauelement für Fahrzeuge, insbesondere ein Regal oder einen Schrank, und ein Fahrzeug, insbesondere ein Kraftfahrzeug, mit einem Einbauelement im Innenraum oder Laderaum des Fahrzeugs.

Es ist bekannt, Regale und Schränke in Kraftfahrzeuge einzubauen. Typische Beispiele sind Kundendienstfahrzeuge oder auch Campingmobile. Solche Regale und Schränke, allgemein Einbauelemente, werden über eine starre Schraubverbindung mit dem Fahrzeug bzw. der Fahrzeugkarosserie oder dem Fahrzeugrahmen verbunden. Die Fahrzeughersteller haben das Bestreben, ein Fahrzeug so leicht wie möglich zu bauen, um Kraftstoff zu sparen. Typischerweise wird auch die Karosseriestruktur bzw. der Rahmen des Fahrzeugs leichter gebaut, beispielsweise durch Verwendung von dünneren Streben mit Verstärkungen oder durch Verwendung von neuen Materialien. Im Ergebnis führt dies dazu, dass eine mechanische Verbindung beziehungsweise Anbindung eines Regals zu dem Fahrzeugrahmen geschwächt wird, weil der Fahrzeugrahmen in der Belastungsrichtung der Verbindung nicht mehr so stabil ist. Dies führt dazu, dass beispielsweise in einem Regal nur noch geringere Lasten angeordnet werden dürfen als bei Fahrzeugen mit stabilerer Fahrzeugstruktur bzw. Rahmen, da höhere Lasten bei einem Aufprallunfall das Regal aus dem Fahrzeugrahmen bzw. der Karosseriestruktur reißen, da der Fahrzeugrahmen bzw. die Karosseriestruktur reißt.

Die WO 2014/041241 A1 offenbart eine mechanische Sicherung mit einem Bruchabschnitt und einem Absorptionsabschnitt. Der Bruchabschnitt bricht, wenn eine Kraft auf die Sicherung wirkt, die größer als eine vordefinierte Kraft ist. Nach dem Brechen des Bruchabschnitts wird die Kraft vom Absorptionsabschnitt aufgenommen.

Die WO 2011/008154 A1 offenbart eine Befestigungsvorrichtung zur Energieabsorption mit zwei Befestigungsabschnitten und einem Ausdehnungsteil. Das Ausdehnungsteil weist ein Netzmuster auf, das sich verlängert, wenn eine Kraft auf die Befestigungsvorrichtung wirkt und einen vordefinierten Wert überschreitet.

Die US 2005/012319 A1 offenbart eine Lastbegrenzungsvorrichtung mit einem Lastbegrenzungselement, das zwischen einer Fahrzeuginsassenrückhaltevorrichtung und einem Ankerpunkt verbunden ist. Das Lastbegrenzungselement ist so konfiguriert, dass es sich plastisch verformt, um Kräfte abzuleiten, die ein Fahrzeuginsasse während eines Unfalls auf das Lastbegrenzungselement ausübt.

Die US 2013/334828 A1 offenbart eine Zurrvorrichtung zum Sichern übergroßer Gegenstände in einem Fahrzeugkofferraum.

Aufgabe der Erfindung ist es, ein Befestigungselement, ein Einbauelement für Fahrzeuge und ein Fahrzeug dahingehend zu verbessern, dass auch sehr schwere Einbauelemente bzw. Einbauelemente für hohe Lasten sicher angebunden am Fahrzeug beziehungsweise Fahrzeugrahmen werden können.

Erfindungsgemäß ist hierzu ein Befestigungselement gemäß Anspruch 1 zum Befestigen von Einbauelementen in Fahrzeugen, insbesondere Regale oder Schränke, vorgesehen, wobei das Befestigungselement ein erstes Befestigungsende, ein zweites Befestigungsende und einen Verbindungsabschnitt zwischen dem ersten und dem zweiten Befestigungsende aufweist, bei dem der Verbindungsabschnitt wenigstens einen Absorptionsbereich aufweist, der beim Überschreiten einer maximalen vordefinierten Haltebelastung zwischen dem ersten Befestigungsende und dem zweiten Befestigungsende nachgibt und sich verformt, wobei der Absorptionsbereich so ausgebildet ist, dass ein Verformungsweg begrenzt.

Das Vorsehen eines Absorptionsbereichs schafft die Möglichkeit, bei einem Aufprall oder nur einem starken Bremsvorgang einen Teil der kinetischen Energie durch eine kontrollierte und definierte Verformung des Absorptionsbereichs aufzunehmen. Der Absorptionsbereich ist also ein Bereich des Befestigungselements, der wenigstens zeitweise kinetische Energie des Einbauelements aufnehmen kann. Die Anbindung des Einbauelements am Fahrzeugrahmen bzw. der Karosseriestruktur wird dadurch weniger stark belastet als bei einer starren Verbindung, beispielsweise einer Schraubverbindung oder Schweißverbindung. Das Einbauelement kann durch das erfindungsgemäße Befestigungselement dadurch für höhere Lasten ausgelegt werden, als wenn das Einbauelement lediglich mit starren Schraubverbindungen mit dem Fahrzeugrahmen bzw. der Karosseriestruktur verbunden wäre. Das erfindungsgemäße Befestigungselement arbeitet somit als Absorber für kinetische Energie, der im Falle eines Unfalls kinetische Energie des Einbauelements aufnimmt, so dass wenigstens ein Teil der kinetischen Energie des Einbauelements durch das Befestigungselements absorbiert wird und das Einbauelement mit reduzierter Kraft am Fahrzeugrahmen zieht. Der Absorptionsbereich erfährt dabei immer eine Änderung seiner räumlichen Abmessungen, wobei diese Änderung reversibel oder irreversibel sein kann. Das Befestigungselement reißt oder bricht dabei nicht, so dass das Einbauelement weiter sicher am Fahrzeug gehalten ist. Der Absorptionsbereich nimmt lediglich einen Teil der Aufprallenergie bzw. kinetischen Energie des Einbauelements beim Aufprall oder bei einem starken Bremsvorgang auf und absorbiert diese wenigstens zeitweise, indem diese Energie beispielsweise in eine mechanische Verformung des Absorptionsbereichs übergeht. Der Verformungsweg ist durch eine geeignete konstruktive Ausbildung des Absorptionsbereichs begrenzt, so dass nach Erreichen des maximalen Verformungswegs die Haltekraft oder Zugkraft im Befestigungselement stark ansteigt. Der Absorptionsbereich ist so ausgebildet, dass bei einem Fahrzeugaufprall zwar möglicherweise der maximale Verformungsweg erreicht wird, das Befestigungselement aber nicht durch Brechen oder Reißen versagt. Dadurch kann ein Einbauelement im Falle eines Aufpralls des Fahrzeugs gehalten werden, da der konstruktiv vorgegebene maximale Verformungsweg begrenzt ist. Wird die Zugkraft bspw. bei einem Zugversuch nach Erreichen des maximalen Verformungswegs immer weiter erhöht, versagt das Befestigungselement irgendwann durch Brechen oder Reißen. Nach Erreichen eines maximalen vordefinierten Verformungswegs führt ein weiteres Überschreiten der maximalen Haltebelastung zum Versagen des Befestigungselements, beispielsweise durch Brechen oder Reißen. Das erfindungsgemäße Befestigungselement wird mit einem der beiden Befestigungsenden mit dem Fahrzeug und mit dem anderen der beiden Befestigungsenden mit dem Einbauelement verbunden. Der Absorptionsbereich ist dann zwischen den beiden Befestigungsenden angeordnet und kann im Falle eines Aufpralls, eines sonstigen Unfalls oder auch eines sehr starken Bremsvorgangs kinetische Energie absorbieren, indem er diese kinetische Energie beispielsweise in eine mechanische Verformung umwandelt. Im Rahmen der Erfindung kann das Befestigungselement mehr als zwei Befestigungsenden aufweisen, wobei immer der Verbindungsabschnitt zwischen wenigstens zwei Befestigungsenden angeordnet ist, so dass kinetische Energie durch den Absorptionsbereich oder die mehreren Absorptionsbereiche aufgenommen werden kann. Beispielsweise kann im Rahmen der Erfindung der Verbindungsabschnitt auch dafür ausgelegt sein, sich in mehreren Richtungen mechanisch zu verformen. Dadurch kann nicht nur kinetische Energie in und entgegen der Fahrzeuglängsrichtung aufgenommen werden, sondern beispielsweise auch kinetische Energie in Fahrzeughochrichtung oder -querrichtung, beispielsweise wenn das Fahrzeug zu schnell über eine starke Bodenwelle fährt oder einen seitlichen Aufprall erfährt.

Erfindungsgemäß verformt sich der Absorptionsbereich beim Überschreiten der maximalen Haltebelastung wenigstens abschnittsweise plastisch.

Mittels einer plastischen Verformung, beispielsweise eines Metallstreifens oder eines Gurts, kann eine maximale vordefinierte Haltebelastung und ein maximaler vordefinierter Verformungsweg exakt eingestellt werden. Nachdem das Befestigungselement plastisch verformt ist, muss dieses ausgetauscht oder zurückverformt werden, um den Ausgangszustand wiederherzustellen.

In Weiterbildung der Erfindung weist der Absorptionsbereich wenigstens einen gebogenen Blechstreifen auf, wobei ein verformter gestreckter Zustand des Blechstreifens eine Begrenzung des Verformungswegs definiert.

Eine plastische Verformung des Absorptionsbereichs wird in diesem Fall durch die Streckung des Blechstreifens ausgehend von seinem ursprünglichen, gebogenen Zustand realisiert. Bspw. kann der Blechstreifen so bemessen sein, dass die Streckung des Blechstreifens ausgehend von seinem gebogenen Zustand eine erste Haltekraft über einen Verformungsweg bereitstellt, wobei der Verformungsweg durch die Begrenzung des Verformungswegs auf den maximal vordefinierten Verformungsweg gegeben ist. Ist der gebogene Blechstreifen dann gestreckt, steigt die Haltekraft stark an und es findet keine plastische Verformung des Absorptionsbereichs mehr statt. Das Einbauelement kann dadurch sicher im Fahrzeug gehalten werden. Erst dann, wenn ausgehend vom bereits gestreckten Zustand in einem Zugversuch die Zugkraft immer weiter erhöht wird, wird der Blechstreifen sich weiter dehnen, einschnüren und dann letztendlich reißen. Mittels eines gebogenen Blechstreifens kann erfindungsgemäß somit ein definierter Verformungsweg bereitgestellt und auch durch den gestreckten Zustand des Blechstreifens auf einen maximal vordefinierten Verformungsweg begrenzt werden. Die Biegung des Blechstreifens erfolgt vorteilhafterweise so, dass die Biegung um eine oder mehrere parallel zur Oberseite und Unterseite des Blechstreifens liegende Biegeachsen erfolgt, wobei die Oberseite und Unterseite flächenmäßig größer sind als die Seitenflächen des Blechstreifens.

In Weiterbildung der Erfindung ist das Befestigungselement als Blechstreifen ausgebildet.

Mittels eines Blechstreifens kann zum einen ein sehr kostengünstiges Befestigungselement auch in großen Stückzahlen hergestellt werden und zum anderen kann durch geeignete Gestaltung des Blechstreifens im Absorptionsbereich eine vordefinierte Haltebelastung und ein maximaler, vordefinierter Verformungsweg präzise eingestellt werden.

In Weiterbildung der Erfindung ist der Verbindungsabschnitt im Absorptionsbereich mehrfach gebogen.

Jede Biegung des Verbindungsabschnitts kann sich beim Einleiten einer Haltebelastung, die die maximal vordefinierte Haltebelastung überschreitet, kontrolliert verformen. Die Biegungen können dabei in unterschiedlichen Richtungen erfolgen, um kontrollierte Verformungen beim Einleiten von Belastungen in unterschiedlichen Richtungen zu ermöglichen.

In Weiterbildung ist der Verbindungsabschnitt im Absorptionsbereich wellenartig gebogen.

Auf diese Weise können eine kontrollierte Verformung und ein kontrollierter, vordefinierter Verformungsweg erreicht werden.

Erfindungsgemäß ist der Verbindungsabschnitt aus zwei Blechstreifenabschnitten gebildet, die miteinander verbunden sind.

Auf diese Weise kann erforderlichenfalls auch die Verbindung selbst als Absorptionsbereich genutzt werden.

In Weiterbildung der Erfindung sind die Blechstreifenabschnitte mittels wenigstens eines Niets miteinander verbunden.

Die Verbindung zweier Blechstreifenabschnitte mit wenigstens einem Niet ermöglicht es, die Verbindung ohne Veränderung der Materialeigenschaften der Blechstreifen zu ermöglichen. Dies ist gerade beim Einstellen einer maximalen vordefinierten Haltebelastung und eines maximalen vordefinierten Verformungswegs wesentlich. Werden zwei Blechstreifen beispielsweise durch Schweißen miteinander verbunden, kann es zu einer Veränderung der Materialeigenschaften und des Scherverhaltens kommen.

Erfindungsgemäß sind die beiden Blechstreifenabschnitte jeweils hakenförmig gebogen und ineinander eingehängt.

Auf diese Weise lässt sich ein kompaktes Befestigungselement realisieren, das kostengünstig hergestellt werden kann.

In Weiterbildung ist der Verbindungsabschnitt im Verformungsabschnitt aus wenigstens zwei nebeneinander verlaufenden Blechstreifen gebildet, wobei einer der Blechstreifen zu seiner Oberseite hin konvex gekrümmt ist und ein anderer Blechstreifen zu seiner Unterseite hin konvex gekrümmt ist.

Indem zwei Blechstreifen gegensinnig gekrümmt sind, steht ein Verformungsweg dahingehend zur Verfügung, dass die beiden gekrümmten Blechstreifen gestreckt werden und der maximale vordefinierte Verformungsweg dann erreicht ist, wenn die Blechstreifen vollständig gestreckt sind. Da die beiden Blechstreifen in unterschiedliche Richtungen gekrümmt sind, können die Befestigungsenden während der Verformung der Blechstreifen symmetrisch belastet werden.

In Weiterbildung weist der Verbindungsabschnitt im Absorptionsbereich einen geschlitzten Blechstreifen auf.

Vorteilhafterweise verlaufen die Schlitze quer zur Belastungsrichtung, so dass auch dadurch eine kontrollierte Verformung erzielt werden kann.

In Weiterbildung ist das Befestigungselement im Verbindungsabschnitt als linienförmiges oder flächenförmiges textiles Element, insbesondere als Gurt oder Seil, ausgebildet.

Auch mittels eines textilen Elements lässt sich eine kontrollierte Verformung und dadurch eine maximale vordefinierte Haltebelastung und ein maximaler vordefinierter Verformungsweg realisieren. Das textile Element kann sich dabei elastisch und/oder plastisch verformen.

Beispielsweise sind Bergsteigerseile so ausgelegt, dass sie den Sturz eines Bergsteigers auffangen und gleichzeitig gestreckt werden, um einen Teil der kinetischen Energie des fallenden Bergsteigers bereits zu absorbieren, bevor der maximal definierte Halteweg erreicht ist und der Sturz des Bergsteigers gestoppt wird. Vergleichbare Eigenschaften können aber auch Gurte aufweisen. Im Rahmen der Erfindung muss sich das textile Element nicht zwingend plastisch verformen, das textile Element kann beispielsweise auch als Gurt oder Seil ausgebildet sein, das unter Zugbelastung länger wird und nach Wegfall der Zugbelastung wieder zurück federt. Im Rahmen der Erfindung werden textile Elemente im Verbindungsabschnitt bevorzugt, die sich beim Überschreiten einer maximalen vordefinierten Haltebelastung zunächst hauptsächlich plastisch verformen und dadurch mittels einer Längendehnung kinetische Energie absorbieren. Ist eine vordefinierte maximale Längendehnung erreicht, wird dadurch der Verformungsweg begrenzt und die Haltekraft oder Zugkraft in dem textilen Element steigt an. Das erfindungsgemäße Befestigungselement kann dadurch seine vorgesehene Funktion erfüllen, im Falle eines Aufpralls kinetische Energie zu absorbieren aber dennoch nur eine geringe Verlagerung des Einbauelements zu erlauben. Wird die Zugkraft in dem textilen Element dann immer weiter erhöht, was allerdings bei einem Fahrzeugaufprall nicht auftreten wird sondern lediglich bei einem Zugversuch, reißt dann das textile Element. Bei der Erfindung können textile Elemente eingesetzt werden, die nach Art von Kletterseilen für Bergsteiger funktionieren. Auch dort wird der Sturz eines Bergsteigers zunächst durch Längendehnung des Kletterseils abgebremst und erst dann abgestoppt.

In Weiterbildung der Erfindung verformt sich der Absorptionsbereich beim Überschreiten der maximalen Haltebelastung wenigstens abschnittsweise elastisch.

Auch eine lediglich elastische Verformung des Absorptionsbereichs kann ausreichen, um ein Ausreißen einer Verbindung des Einbauelements mit einem Fahrzeugrahmen oder einer Karosseriestruktur zu verhindern. Die kinetische Energie wird dadurch zwar nicht dauerhaft sondern nur zeitweise absorbiert, dadurch aber zeitlich so verteilt, dass eine Bruchgrenze oder Reißgrenze der Verbindung zu Fahrzeugrahmen oder Karosseriestruktur nicht überschritten wird. Beispielsweise können Gurte oder Seile so ausgelegt werden, dass sie sich elastisch verformen und nach Abklingen der Haltebelastung wieder in ihre Ausgangslage zurückfedern.

In Weiterbildung der Erfindung weist der Verbindungsabschnitt im Absorptionsbereich wenigstens eine Feder und/oder einen Stoßdämpfer auf.

Mit einer Feder kann kinetische Energie des Einbauelements zeitweise absorbiert oder gespeichert werden. Ein Stoßdämpfer dämpft die Bewegung des Einbauelements und absorbiert dabei kinetische Energie des Einbauelements, die dann im Stoßdämpfer in Wärmeenergie transformiert wird.

Das der Erfindung zugrunde liegende Problem wird auch durch ein Einbauelement für Fahrzeuge, insbesondere Regal oder Schrank, gelöst, bei dem wenigstens ein erfindungsgemäßes Befestigungselement vorgesehen ist, um das Einbauelement mit einem Rahmen und/oder einer Tragstruktur des Fahrzeugs zu verbinden.

Das der Erfindung zugrunde liegende Problem wird auch durch ein Fahrzeug, insbesondere ein Kraftfahrzeug, mit einem Einbauelement im Innenraum oder Laderaum des Fahrzeugs gelöst, bei dem das Einbauelement mittels wenigstens eines erfindungsgemäßen Befestigungselements mit einem Rahmen und/oder einer Tragstruktur des Fahrzeugs verbunden ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten und der Beschreibung beschriebenen Ausführungsformen können dabei in beliebiger Weise miteinander kombiniert werden, auch ohne die weiteren Merkmale, mit denen sie im Zusammenhang gezeigt oder beschrieben sind, ohne den Rahmen der Erfindung zu überschreiten. In den Zeichnungen zeigen:
- Fig. 1a: eine schematische Darstellung einer Einbausituation eines erfindungsgemäßen und zweier nicht-erfindungsgemäßen Einbauelemente in ein Fahrzeug,
- Fig. 1b: eine schematische Darstellung einer Einbausituation eines Einbauelements nach dem Stand der Technik,
- Fig. 2: eine vergrößerte und isolierte Darstellung des erfindungsgemäßen Befestigungselements der Fig. 1a von schräg oben,
- Fig. 3: das Befestigungselement der Fig. 2 in einer Seitenansicht,
- Fig. 4: eine Schnittansicht des Befestigungselements der Fig. 2,
- Fig. 5: eine Ansicht des Befestigungselements der Fig. 2 von schräg hinten,
- Fig. 6: eine vergrößerte und isolierte Darstellung eines der nichterfindungsgemäßen Befestigungselemente der Fig. 1a von schräg oben,
- Fig. 7: das Befestigungselement der Fig. 6 in einer Seitenansicht,
- Fig. 8: das Befestigungselement der Fig. 6 in einer Vorderansicht,
- Fig. 9: eine vergrößerte und isolierte Darstellung eines der nichterfindungsgemäßen Befestigungselemente der Fig. 1a von schräg oben,
- Fig. 10: eine Seitenansicht des Befestigungselements der Fig. 9,
- Fig. 11: eine Vorderansicht des Befestigungselements der Fig. 9,
- Fig. 12: eine abschnittsweise Darstellung eines nicht-erfindungsgemäßen Einbauelements gemäß einer weiteren Ausführungsform von schräg oben,
- Fig. 13: das Einbauelement der Fig. 12 aus einer anderen Perspektive,
- Fig. 14: das Einbauelement der Fig. 12 von schräg hinten,
- Fig. 15: eine vergrößerte Darstellung einer Einzelheit aus Fig. 13,
- Fig. 16: eine vergrößerte Einzelheit aus Fig. 14 und
- Fig. 17: eine weitere vergrößerte Einzelheit aus Fig. 13.

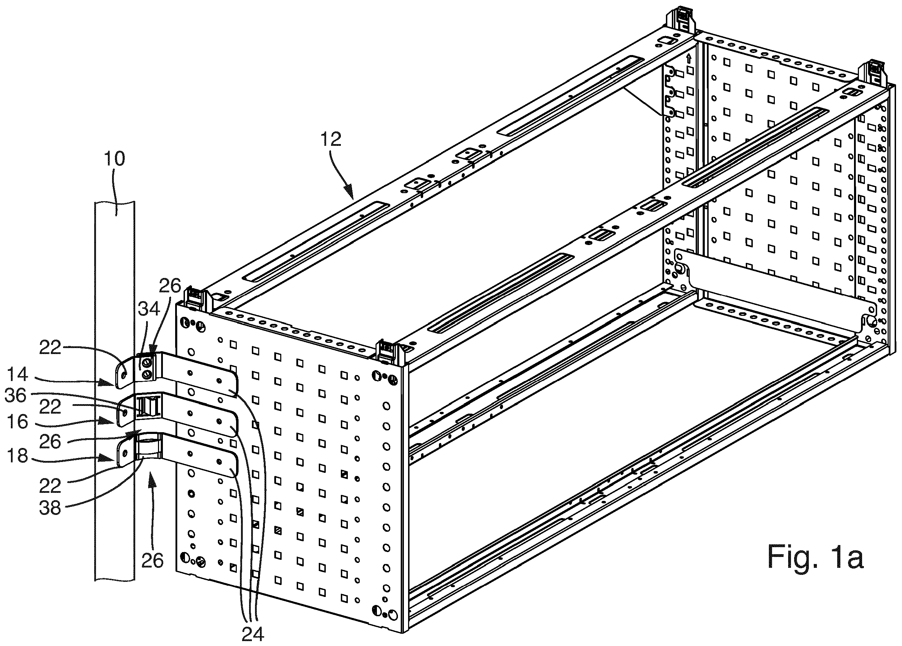

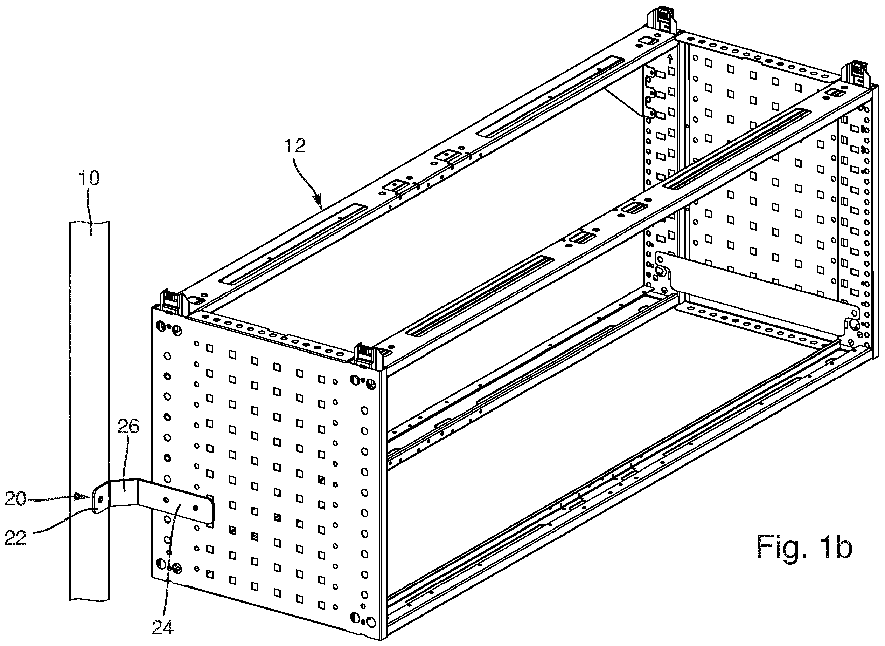

Fig. 1 zeigt schematisch einen Abschnitt einer Karosseriestruktur 10 eines im Übrigen nicht dargestellten Fahrzeugs sowie ein Einbauelement 12 in Form eines Regals. Das Fahrzeug mit der Karosseriestruktur 10 ist beispielsweise als Kastenwagen ausgebildet und das Regal 12 ist in den Laderaum des Fahrzeugs eingebaut, um dann beispielsweise Aufbewahrungskästen für Kleinteile, insbesondere Schrauben, oder auch Werkzeugkisten und dergleichen aufzunehmen.

Das Einbauelement 12 ist mit der Karosseriestruktur 10 mittels drei Befestigungselementen 14, 16 und 18 verbunden. Die Anordnung der Befestigungselemente 14, 16 und 18 ist dabei lediglich beispielhaft und dient der Verdeutlichung der unterschiedlichen Gestaltung der Befestigungselemente 14, 16 und 18. In der Praxis würde beispielsweise lediglich das Befestigungselement 14 zur Verbindung von Karosseriestruktur 10 und Einbauelement 12 an der dargestellten Stelle verwendet werden und ein weiteres, gleichartiges Befestigungselement 14 würde dann unterhalb des Befestigungselements 28 angeordnet, wohingegen die Befestigungselemente 16, 18 in der Praxis dann nicht verwendet würden. Anstelle des Befestigungselements 14 oder mehrerer Befestigungselemente 14 könnten dann selbstverständlich auch eines oder mehrere der Befestigungselemente 16 oder 18 verwendet werden.

Fig. 1b zeigt die Situation der Fig. 1a, wobei ein Befestigungselement 20 dargestellt ist. Das Befestigungselement 20 ist nicht erfindungsgemäß ausgebildet und lediglich zur Verdeutlichung eines Vergleichs dargestellt. Das Befestigungselement 20 weist ein erstes Befestigungsende 22 auf, mit dem das Befestigungselement 20 mit der Karosseriestruktur 10 verbunden ist. Die Verbindung erfolgt beispielsweise über eine Blechschraube. Das Befestigungselement 22 weist ein zweites Befestigungsende 24 auf, das mit zwei Durchgangsöffnungen versehen ist und das an dem Einbauelement 12 befestigt ist, beispielsweise mittels zweier Schraubbolzen. Die beiden Befestigungsenden 22, 24 sind mittels eines Verbindungsabschnitts 26 miteinander verbunden. Der Verbindungsabschnitt 26 ist als ebener Abschnitt eines Blechstreifens ausgebildet, wobei der Blechstreifen eingangs und ausgangs des Verbindungsabschnitts 26 um jeweils 45° abgewinkelt ist, so dass die beiden Befestigungsenden 22, 24 im rechten Winkel zueinander angeordnet sind. Der Verbindungsabschnitt 26 kann sich, da er als Abschnitt eines Blechstreifens ausgebildet ist, zwar verformen, eine solche Verformung erfolgt aber undefiniert und nur in sehr geringem Maß. Wird der Verbindungsabschnitt 26 zu stark belastet, wird er sich erst im geringem Maß dehnen und dann unmittelbar reißen. Wenn beispielsweise das Fahrzeug in einen Unfall verwickelt ist und beispielsweise auf eine Wand aufprallt, so wird die Karosseriestruktur 10 abgestoppt, das Einbauelement 12 hat aber ebenfalls eine große kinetische Energie und versucht daher, sich weiter in Fahrtrichtung, in Fig. 1 also beispielsweise nach rechts oben, weiterzubewegen. Das Verbindungselement 20 verhindert eine solche Bewegung des Einbauelements 12 und wird dadurch in einer Richtung nach rechts oben in Fig. 1 stark belastet. Zwischen den Befestigungsenden 22, 24 wirkt dadurch eine sehr große Haltebelastung. Ist das Befestigungselement 20 stabil genug ausgelegt, so wird diese Haltebelastung ohne Verformung des Befestigungselements 20 auf die Karosseriestruktur 10 und speziell eine Verbindung zwischen dem Befestigungselement 20 und der Karosseriestruktur 10 übertragen. Da moderne Fahrzeuge eine möglichst leicht ausgelegte Karosseriestruktur 10 haben, ist zu befürchten, dass entweder die Karosseriestruktur 10 reißt oder eine Befestigung des Befestigungselements 20 an der Karosseriestruktur 10 ausreißt.

Ist die Karosseriestruktur 10 stabil genug ausgelegt und auch die Verbindung zwischen dem Befestigungsende 22 und der Karosseriestruktur 10, beispielsweise eine Blechschraube, stabil genug ausgelegt, wird vor einer nennenswerten Verformung des Verbindungsabschnitts 26 dieser reißen, so dass das Einbauelement 12 sich von der Karosseriestruktur 10 löst.

Sowohl das Reißen der Karosseriestruktur 10, das Ausreißen des Befestigungselements 20 aus der Karosseriestruktur 10 als auch das Reißen des Verbindungsabschnitts 26 kann zu lebensgefährlichen Situationen für die Insassen des Fahrzeugs führen.

Die Befestigungselemente 14 (erfindungsgemäß), 16 und 18 (nicht-erfindungsgemäß) gemäß Fig. 1a weisen neben den beiden Befestigungsenden 22, 24 jeweils einen Absorptionsbereich 34, 36 bzw. 38 auf. Dieser Absorptionsbereich absorbiert beim Überschreiten einer maximal vordefinierten Haltebelastung kinetische Energie des Einbauelements und definiert gleichzeitig einen maximalen Verformungsweg. Nach Erreichen des maximalen Verformungswegs kommt es bis zum Versagen des Befestigungselements, beispielsweise durch Brechen oder Reißen, zu keiner definierten Verformung des Befestigungselements mehr, vielmehr wird sich das gesamte Befestigungselement noch in geringem Maß dehnen und dann unmittelbar reißen. Bei den Befestigungselementen 14, 16, 18 verformt sich der Absorptionsbereich 34, 36, 38 beim Aufnehmen der kinetischen Energie plastisch.

Bei dem geschilderten Belastungsfall, nämlich einem Aufprall des Fahrzeugs, wird dadurch die kinetische Energie des Einbauelements 12 unverändert in eine in Fig. 1 beispielsweise nach oben rechts gerichtete Haltekraft umgesetzt, die dann über die zweiten Befestigungsenden 24 jeweils in die Absorptionsbereiche 34, 36, 38 eingeleitet wird. Die Absorptionsbereiche 34, 36, 38 werden sich dann kontrolliert plastisch verformen und dadurch einen Teil der kinetischen Energie des Einbauelements 12 durch die plastische Verformung absorbieren. Die im Falle des Aufpralls über das erste Befestigungsende 22 auf die Karosseriestruktur 10 wirkende Haltebelastung ist dadurch wesentlich geringer als bei dem Befestigungselement 20 gemäß Fig. 1b ohne einen Verformungsabschnitt 34, 36, 38. Selbst wenn die Karosseriestruktur 10 also vergleichsweise leicht und wenig belastbar ausgebildet ist, kann dennoch das Einbauelement 12 auch mit schweren Gegenständen beladen werden, ohne dass eine maximal zulässige Haltebelastung im Bereich der Verbindung der Befestigungselemente 14, 16, 18 mit der Karosseriestruktur 10 überschritten wird.

Wie eingangs bereits ausgeführt wurde, dient Fig. 1a lediglich zur Verdeutlichung und ist als schematische Darstellung zu verstehen. Üblicherweise werden zur Verbindung des Einbauelements 12 mit der Karosseriestruktur 10 lediglich gleichartige Verbindungselemente 14, 16, 18 verwendet, wobei dann beispielsweise zwei Verbindungselemente 14 eingesetzt werden, eines in der dargestellten Position und eines am unteren Ende des Einbauelements 12. Weitere, gleichartige Verbindungselemente können dann beispielsweise an der in Fig. 1a rechten Seite des Einbauelements 12 eingesetzt werden, um auch dort das Einbauelement 12 mit der Karosseriestruktur 10 zu verbinden.

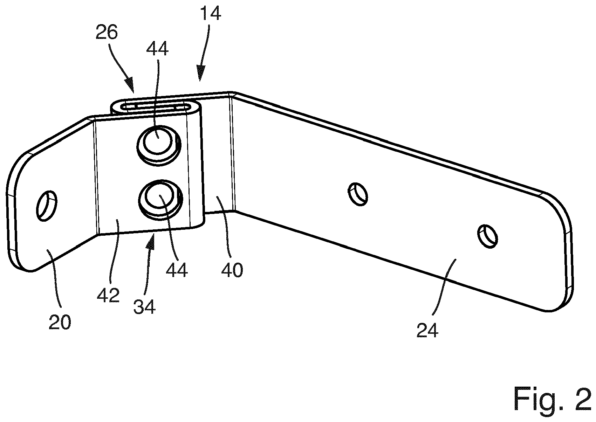

Die Darstellung der Fig. 2 zeigt das Befestigungselement 14 der Fig. 1a in vergrößerter und isolierter Darstellung. Der zwischen den Befestigungsenden 20, 24 angeordnete Verbindungsabschnitt 26 definiert den Absorptionsbereich 34. Der Verbindungsabschnitt 26 besteht aus zwei hakenförmigen Blechstreifenabschnitten 40, 42, die ineinander eingehängt und mittels zweier Nieten 44 miteinander verbunden sind. Dabei verbinden die beiden Nieten 44 lediglich die beiden freien Schenkel der hakenförmigen Abschnitte 40, 42. Die jeweils mit einem der Befestigungsenden 20, 24 verbundenen Schenkel sind durch die Nieten 44 nicht miteinander verbunden. Diese Schenkel weisen Durchgangsöffnungen auf, durch die die Nieten 44 sichtbar sind und die es auch ermöglichen, die Nieten 44 im eingehakten Zustand der beiden Blechstreifenabschnitte 40, 42 zu setzen.

Tritt zwischen den beiden Befestigungsenden 20, 24 eine Belastung auf, die eine vordefinierte Haltebelastung überschreitet, wird sich der Absorptionsbereich 34 plastisch dadurch verformen, dass die beiden hakenförmigen Blechstreifenabschnitte 40, 42 aufgebogen werden und dadurch ihre in Fig. 2 dargestellte, jeweils U-artige Form verlieren. Die beiden Befestigungsabschnitte 20, 24 werden sich durch diese plastische Verformung des Absorptionsbereichs 34 dadurch voneinander wegbewegen. Während dieser Bewegung, die selbstverständlich durch eine Bewegung des Einbauelements 12 relativ zur Karosseriestruktur 10 verursacht ist, wird im Absorptionsbereich 34 kinetische Energie des Einbauelements 12 absorbiert.

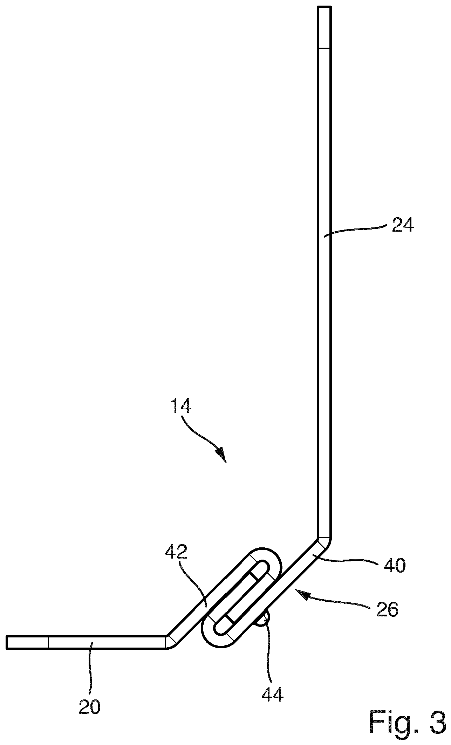

Fig. 3 zeigt eine Seitenansicht des Verbindungselements 14. In dieser Ansicht ist gut zu erkennen, dass die beiden Blechstreifenabschnitte 42, 44 jeweils hakenförmig ausgebildet sind bzw. ein hakenförmiges Ende aufweisen und mit diesem hakenförmigen Ende ineinander eingehängt sind.

Der Verbindungsabschnitt 26 ist so ausgebildet und angeordnet, dass die beiden Befestigungsenden 20, 24 senkrecht zueinander angeordnet sind.

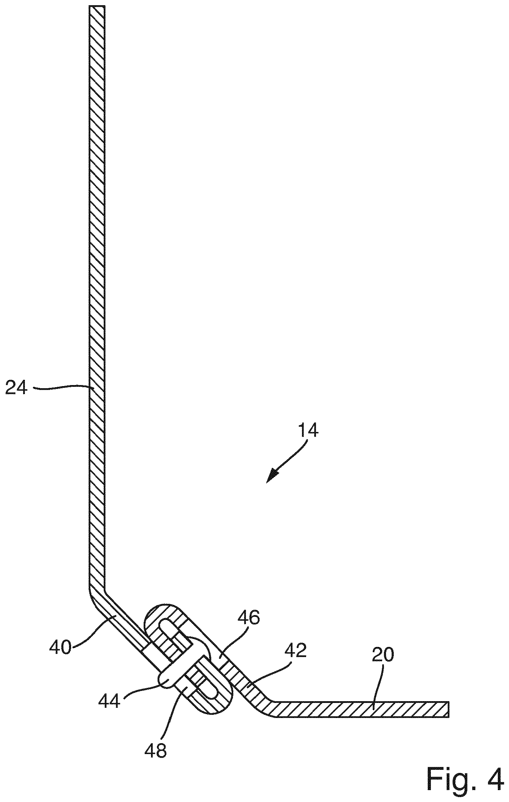

Fig. 4 zeigt eine Schnittansicht des Befestigungselements 14 der Fig. 3, wobei die Schnittebene durch einen der Nieten 44 läuft. In dieser Ansicht ist eine der Ausnehmungen 46 im Blechstreifenabschnitt 42 gut zu erkennen, in der der Kopf des Niets 44 angeordnet wird. In dem Blechstreifenabschnitt 44 ist eine von zwei Ausnehmungen 48 zu erkennen, in dem das dem Kopf des Niets 44 gegenüberliegende Ende angeordnet wird. Wie bereits ausgeführt wurde, dienen die Ausnehmungen 46, 48 auch dazu, den Niet 44 zu setzen und dadurch die Blechstreifenabschnitte 42, 44 miteinander zu verbinden.

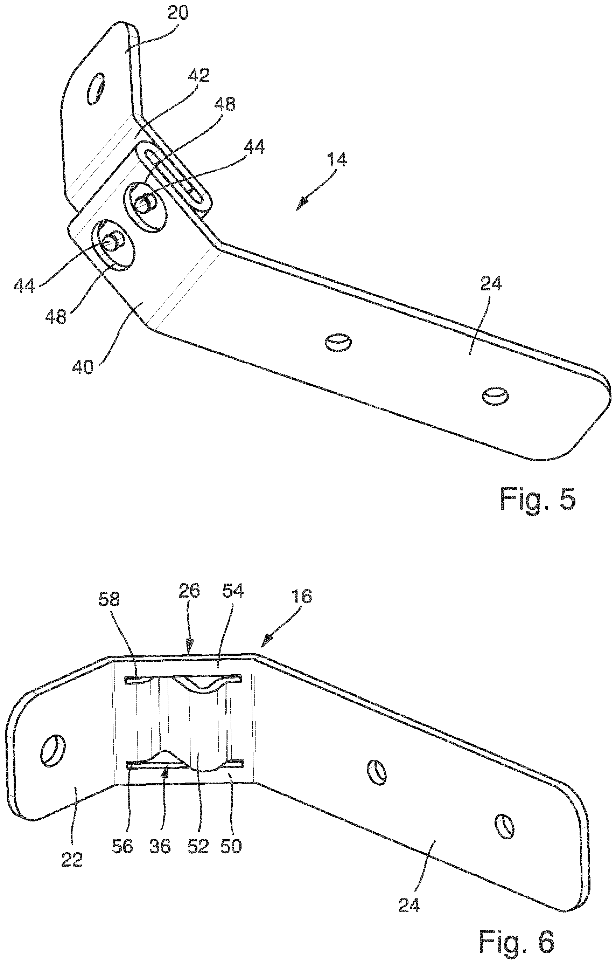

Die Darstellung der Fig. 5 zeigt das Befestigungselement 14 der Fig. 2 in einer Ansicht von schräg hinten. In dieser Ansicht sind die beiden Ausnehmungen 48 in dem Blechstreifenabschnitt 40 zu erkennen. Durch die Ausnehmungen hindurch sind die Nieten 44 und auch der freie Schenkel des Blechstreifenabschnitts 42 zu erkennen.

Die Darstellung der Fig. 6 zeigt das Befestigungselement 16 der Fig. 1a in isolierter Darstellung von schräg oben. Das Befestigungselement 16 ist aus einem Blechstreifen gebildet und die beiden Befestigungsenden 22, 24 sind identisch wie bei dem Befestigungselement 14 ausgebildet und werden daher nicht erneut erläutert. Der Verbindungsabschnitt 26 besteht ebenfalls aus einem Abschnitt des Blechstreifens, ist aber mit einem anderen Absorptionsbereich 36 versehen. Im Absorptionsbereich 36 sind drei nebeneinander angeordnete Blechstreifen 50, 52 und 54 vorgesehen. Die beiden Blechstreifenabschnitte 50, 54 bilden dabei das in Fig. 6 obere bzw. untere Ende des Verbindungsabschnitts 26 und sind eben ausgebildet. Zwischen den beiden Blechstreifenabschnitten 50, 54 ist der Blechstreifenabschnitt 52 angeordnet, der wesentlich breiter ist als die Blechstreifenabschnitte 54. Bei der in Fig. 6 dargestellten Ausführungsform des Verbindungselements 16 ist der Blechstreifenabschnitt 52 etwa viermal so breit wie die Blechstreifenabschnitte 50, 54. Der Blechstreifenabschnitt 52 ist auch wellenförmig ausgebildet und dabei in Form einer vollständigen Welle gestaltet, also mit einem Wellenberg und einem darauffolgenden Wellental. Der Blechstreifenabschnitt 52 ist von dem Blechstreifenabschnitt 50 durch einen Schlitz getrennt, wie auch der Blechstreifenabschnitt 54 vom Blechstreifenabschnitt 52 durch einen Schlitz 58 getrennt ist. Der Absorptionsbereich 36 kann beispielsweise dadurch hergestellt werden, dass der Verbindungsabschnitt 26 in eine Presse eingelegt wird, die dann den mittleren Blechstreifenabschnitt 52 zu der dargestellten Wellenform verformt und gleichzeitig die beiden Schlitze 56, 58 ausstanzt. Durch die Verformung ist dann eine Materialdicke im mittleren Blechstreifenabschnitt 52 etwas geringer als in den Blechstreifenabschnitten 50, 54.

Der Absorptionsbereich 36 wird sich beim Überschreiten einer maximalen Haltebelastung zwischen den beiden Befestigungsenden 22, 24 plastisch verformen. Dies geschieht dadurch, dass die beiden schmäleren Blechstreifenabschnitte 50, 54 in die Länge gezogen werden oder sogar reißen. Der mittlere Blechstreifenabschnitt 52 wird sich hingegen dadurch plastisch verformen, dass er seine Wellenform verliert und gestreckt wird. Ein maximaler Verformungsweg ist dann erreicht, wenn der mittlere Blechstreifenabschnitt 52 wieder annähernd eben ist. Eine weitere Verformung des Befestigungselements 16 kann dann nicht mehr erfolgen. Eine weitere Verformung wird erst dann erfolgen, wenn die Belastung so groß ist, dass dann auch der mittlere Blechstreifenabschnitt 52 reißt. Das Befestigungselement 16 wird aber so ausgelegt, dass auch bei hohen Aufprallgeschwindigkeiten der mittlere Blechstreifenabschnitt 52 nicht reißt, sondern sich lediglich plastisch verformt und nach Erreichen einer annähernd ebenen Verformungsposition des mittleren Blechstreifenabschnitts 52 das Einbauelement 12 dann sicher an der Karosseriestruktur 10 hält.

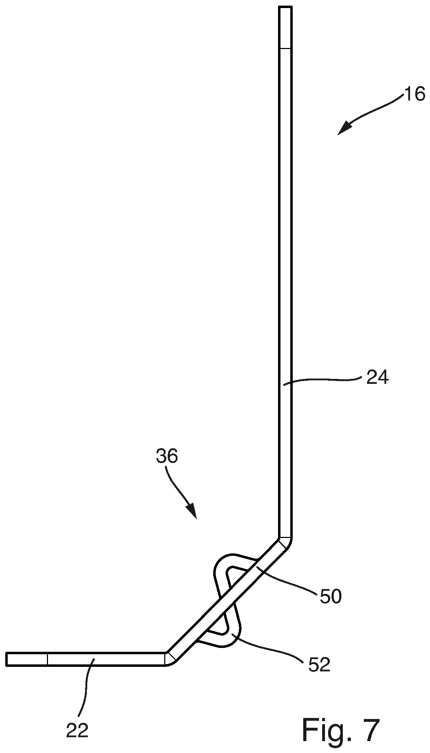

Die Darstellung der Fig. 7 zeigt eine Seitenansicht des Befestigungselements 16 der Fig. 6. In dieser Ansicht ist die Wellenform des mittleren Blechstreifenabschnitts 52, das den Absorptionsbereich 26 bildet, gut zu erkennen.

Auch bei dem Befestigungselement 16 sind die Befestigungsenden 22, 24 im rechten Winkel zueinander angeordnet.

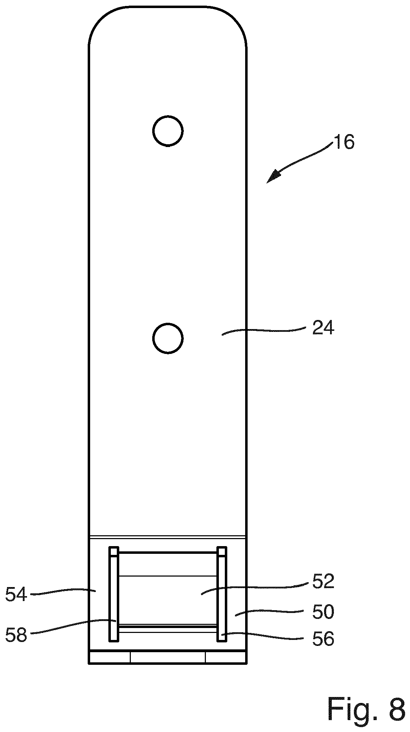

Fig. 8 zeigt das Befestigungselement 16 der Fig. 6 in einer Vorderansicht. Der Blechstreifenabschnitt 50 liegt in der Darstellung der Fig. 8 auf der rechten Seite des Verbindungselements 16 und ist durch den Schlitz 56 vom mittleren Blechstreifenabschnitt 52 getrennt. Der Blechstreifenabschnitt 54 liegt in der Darstellung der Fig. 8 auf der rechten Seite des Verbindungselements 16 und ist durch den Schlitz 58 vom mittleren Blechstreifenabschnitt 52 getrennt.

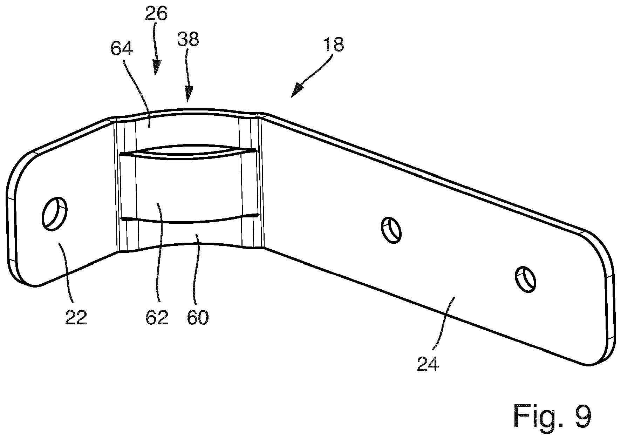

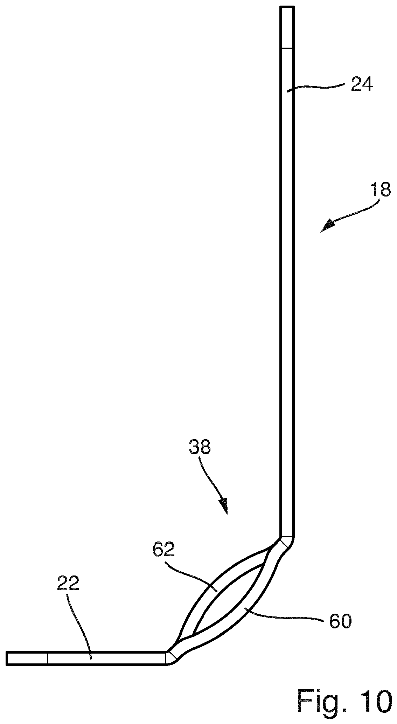

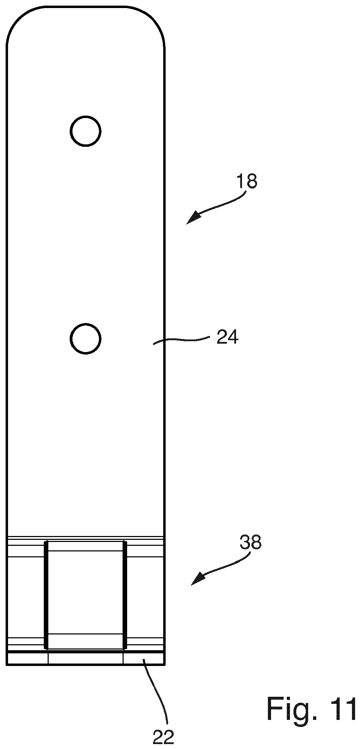

Die Darstellung der Fig. 9 zeigt eine isolierte Darstellung des Verbindungselements 18 der Fig. 1a von schräg oben. Die beiden Befestigungsenden 22, 24 des Befestigungselements 18 sind identisch ausgebildet wie bei den bereits beschriebenen Befestigungselementen 14, 16 und werden daher nicht erneut erläutert. Der Verbindungsabschnitt 26 weist den Absorptionsbereich 38 auf, der aus drei nebeneinander angeordneten Blechstreifen 60, 62 und 64 besteht. In Fig. 9 bildet der Blechstreifenabschnitt 60 eine Unterkante des Verbindungsabschnitts 26 und der Blechstreifenabschnitt 64 eine Oberkante des Verbindungsabschnitts 26. Der mittlere Blechstreifenabschnitt 62 ist zwischen den beiden Blechstreifenabschnitten 60, 64 angeordnet. Der mittlere Blechstreifenabschnitt 62 ist etwa doppelt so breit wie die äußeren Blechstreifenabschnitte 60, 64. Der mittlere Blechstreifenabschnitt 62 ist in Fig. 9 in Richtung des Betrachters gekrümmt, wohingegen die beiden Blechstreifenabschnitte 60, 64 vom Betrachter weg gekrümmt sind. Fig. 10 zeigt eine Seitenansicht des Verbindungselements 18 der Fig. 9 und in dieser Ansicht ist die entgegengesetzte Krümmung der Blechstreifenabschnitte 62 und 60 gut zu erkennen. Wird zwischen den beiden Befestigungsenden 24, 22 des Befestigungselements 18 eine vordefinierte maximale Haltebelastung überschritten, so wird sich der Absorptionsbereich 38 dadurch plastisch verformen, dass die Blechstreifenabschnitte 60, 62, 64 geradegezogen werden. Durch die gegensinnige Krümmung der Blechstreifenabschnitte 60, 64 einerseits und des Blechstreifenabschnitts 62 andererseits bewegen sich die Blechstreifenabschnitte 60, 62, 64 dadurch in der Seitenansicht der Fig. 10 aufeinander zu. Durch die dadurch erfolgende plastische Verformung kann bei einem Aufprall kinetische Energie des Einbauelements 12 absorbiert werden. Der maximale Verformungsweg ist dann erreicht, wenn die Blechstreifenabschnitte 60, 62, 64 gestreckt sind. Eine weitere plastische Verformung erfolgt dann nicht mehr. Lediglich bei einer noch weit höheren Belastung, die aber bei einem Aufprall eines Fahrzeugs nicht erreicht wird, wird dann das Befestigungselement 18 durch Brechen oder Reißen versagen. Das Befestigungselement 18 ist so ausgebildet, dass die beiden Befestigungsenden 22, 24 im rechten Winkel zueinander angeordnet sind. Das Befestigungselement 18 kann aus einem einstückigen Blechstreifen hergestellt werden. Zur Herstellung des Verformungsabschnitts 38 kann der Blechstreifen gepresst und gleichzeitig gestanzt werden, so dass die drei Blechstreifenabschnitte 60, 62, 64 mit der beschriebenen gegensinnigen Krümmung entstehen. Fig. 11 zeigt das Befestigungselement 18 in einer Ansicht von vorne.

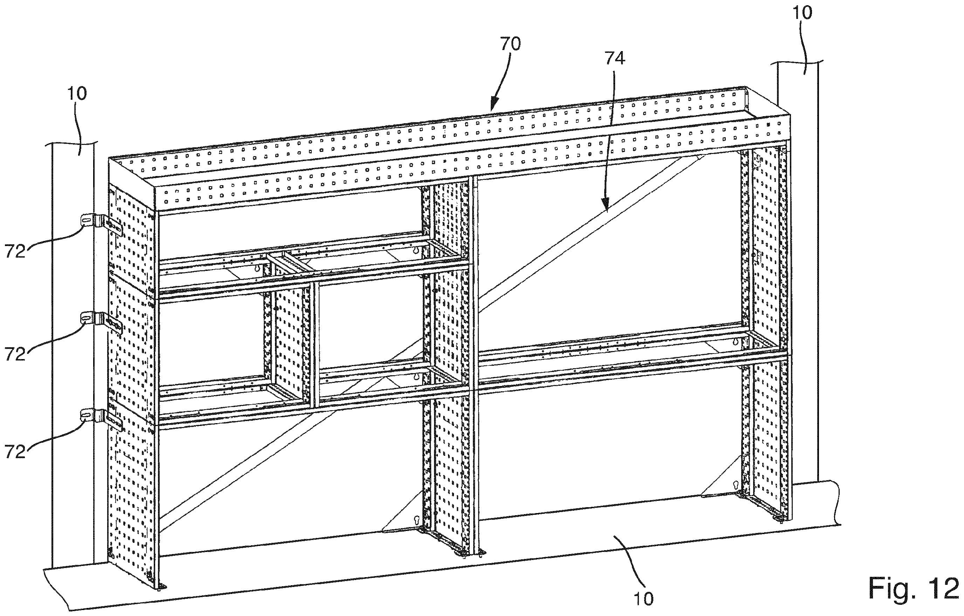

Die Darstellung der Fig. 12 zeigt ein nicht-erfindungsgemäßes Einbauelement 70. Das Einbauelement 70 ist als Regal ausgebildet und, wie in Fig. 12 schematisch dargestellt ist, mit einer Karosseriestruktur 10 eines im Übrigen nicht dargestellten Kraftfahrzeugs verbunden. Zur Verbindung des Einbauelements 70 mit der Karosseriestruktur 10 dienen einerseits drei erfindungsgemäße Befestigungselemente 72. Darüber hinaus ist ein weiteres Befestigungselement 74 vorgesehen, das sich von einer in Fig. 12 unteren linken Ecke des Einbauelements 70 bis in eine obere rechte Ecke des Einbauelements 70 erstreckt.

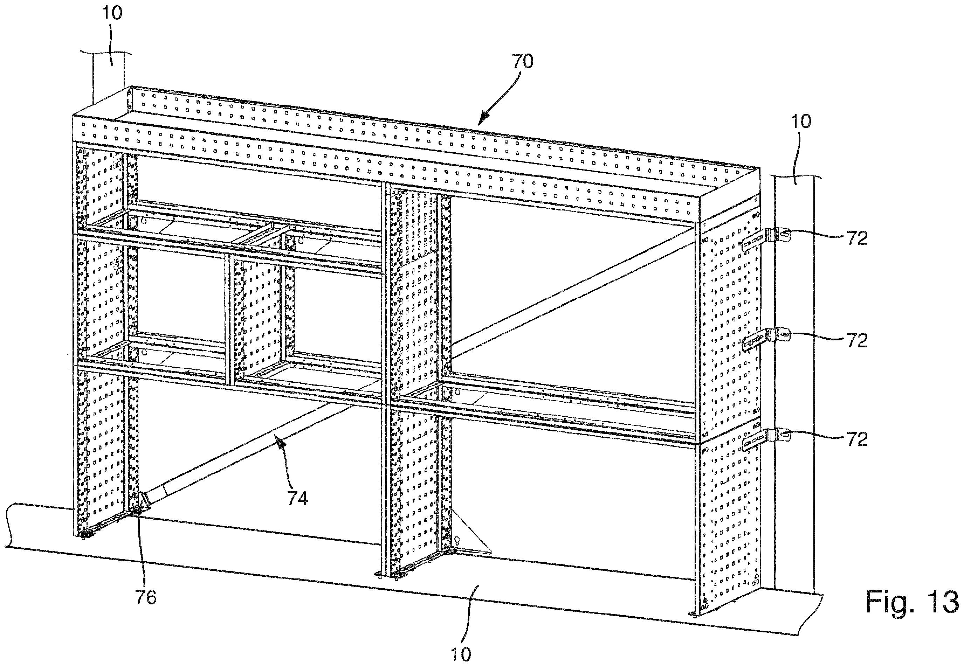

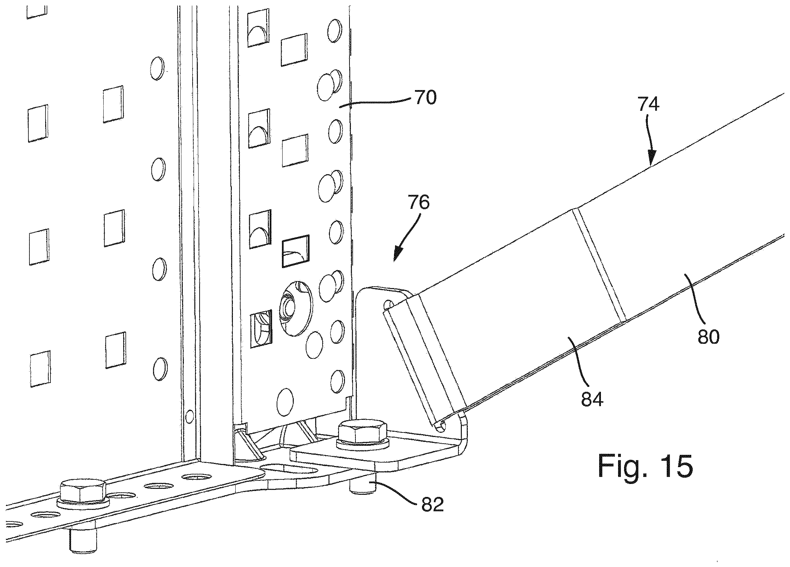

Fig. 13 zeigt eine Ansicht des Einbauelements 70 der Fig. 12 aus einem anderen Blickwinkel. Aus dem Blickwinkel der Fig. 13 ist zu erkennen, dass auch an dem in Fig. 12 und Fig. 13 rechten Ende des Einbauelements 70 drei Befestigungselemente 72 vorgesehen sind, um das Einbauelement mit der Karosseriestruktur 10 zu verbinden. In der Ansicht der Fig. 13 ist auch ein erstes Befestigungsende 76 des Befestigungselements 74 genauer zu erkennen. Mit dem Befestigungsende 76 wird das Befestigungselement 74 einerseits mit der Karosseriestruktur 10 und andererseits mit dem linken Ende des Einbauelements 70 verbunden, siehe auch Fig. 15.

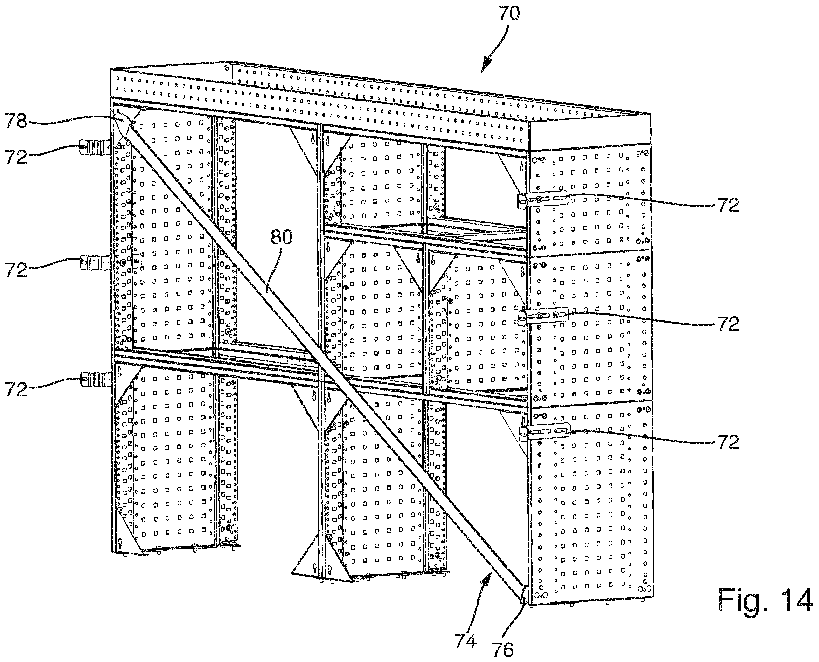

Die Darstellung der Fig. 14 zeigt das Einbauelement 70 der Fig. 12 und 13 in einer Ansicht von hinten. Die Karosseriestruktur 10 ist in dieser Ansicht nicht dargestellt, um die Übersichtlichkeit zu verbessern. Zu erkennen sind die sechs Befestigungselemente 72 sowie ein Befestigungsende 78 des Befestigungselements 74, das dem Befestigungsende 76 gegenüberliegt. Das Befestigungsende 78 ist mit dem Einbauelement 70 verbunden. Wie in Fig. 14 zu erkennen ist, verbindet das Befestigungselement 14 die in Fig. 14 rechts unten liegende Ecke des Einbauelements 70 mit der links oben liegenden Ecke des Einbauelements 70 und verläuft somit diagonal und parallel zu einer Rückseite des Einbauelements 70.

Die beiden Befestigungsenden 76, 78 sind über einen textilen Gurt 80 miteinander verbunden, der einen Verbindungsabschnitt des Befestigungselements 74 bildet. Der Gurt 80 ist dabei so ausgebildet, dass er sich beim Überschreiten einer maximalen Haltebelastung plastisch verformen und dadurch kinetische Energie bei einem Aufprall eines Fahrzeugs absorbieren kann. Der Gurt 80 ist also nach Art eines Bergsteiger- oder Kletterseils ausgebildet, das sich bei hoher Zugbelastung irreversibel längt und dadurch kinetische Energie absorbiert. Bei einem Fahrzeugaufprall in Fahrtrichtung, in Fig. 14 von rechts nach links, strebt das Einbauelement 70 während des Aufpralls noch in Fahrtrichtung weiter, so dass sich auch die obere linke Ecke des Einbauelements 70 gegenüber der unteren rechten Ecke und der unteren linken Ecke des Einbauelements 70 nach vorne, in Fig. 14 also nach links bewegen wird. Eine solche Bewegung wird in einem gewissen Maß durch die Befestigungselemente 72 ermöglicht. Der Gurt 80 erlaubt eine gewisse Bewegung des Einbauelements 70 in der beschriebenen Art und Weise, indem er sich plastisch verformt und dadurch länger wird. Bei dieser plastischen Verformung absorbiert der Gurt 80 dadurch kinetische Energie des Einbauelements 70. Die Verbindung des Befestigungselements 74 am Befestigungsende 76 mit der Karosseriestruktur wird dadurch weniger stark belastet als bei einer starren Ausführung des Gurts 80. Der Gurt 80 kann im Rahmen der Erfindung aber auch so ausgebildet sein, dass er sich lediglich elastisch verformt und dann in seine Ausgangslage zurückfedert.

Fig. 15 zeigt das Befestigungsende 76 des Befestigungselements 74 aus Fig. 13 in vergrößerter Darstellung. Das Befestigungsende 76 besteht aus einem Blechwinkel, der einen Schlitz zum Durchfädeln des Gurts 80 aufweist. Das Befestigungsende 76 ist somit einerseits mit dem Gurt 80 und andererseits über einen Schraubbolzen 82 sowohl mit dem Einbauelement 70 als auch der in Fig. 15 nicht dargestellten Karosseriestruktur verbunden, beispielsweise dem Fahrzeugboden, siehe auch Fig. 13. Der Gurt 80 ist durch den Schlitz im Befestigungsende 76 hindurchgefädelt und in einem Bereich 84 zu einer Schlaufe verbunden, beispielsweise vernäht.

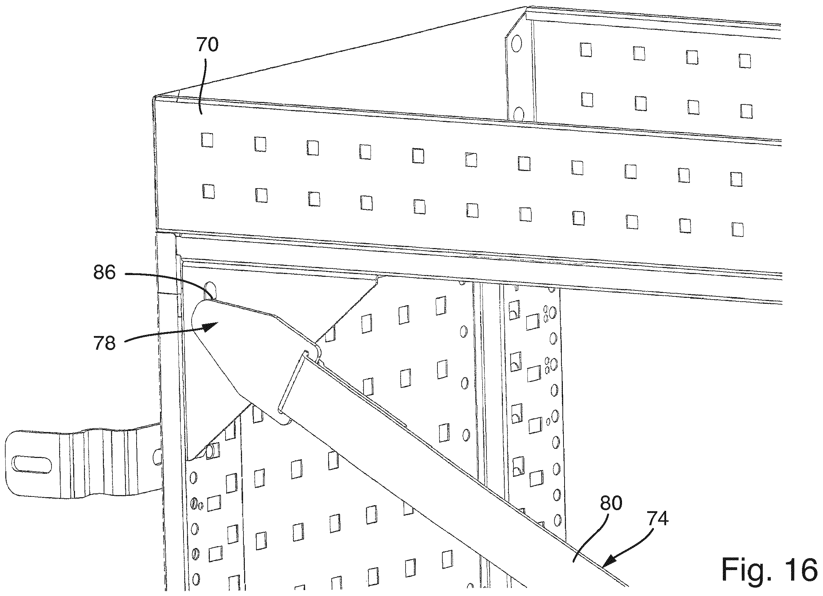

Fig. 16 zeigt in vergrößerter Darstellung das Befestigungsende 78 des Befestigungselements 74. Das Befestigungsende 78 ist aus einer Blechplatte gebildet, die einen Schlitz zum Durchfädeln des Gurts 80 aufweist. Der Gurt 80 bildet eine Schlaufe und ist dadurch mit dem Befestigungsende 78 verbunden. Das Befestigungsende 78 weist eine hakenartige Ausbildung 86 auf, mit der das Befestigungsende 78 in eine passende Durchgangsöffnung am oberen linken Ende des Einbauelements 70 eingehängt ist, siehe auch Fig. 14.

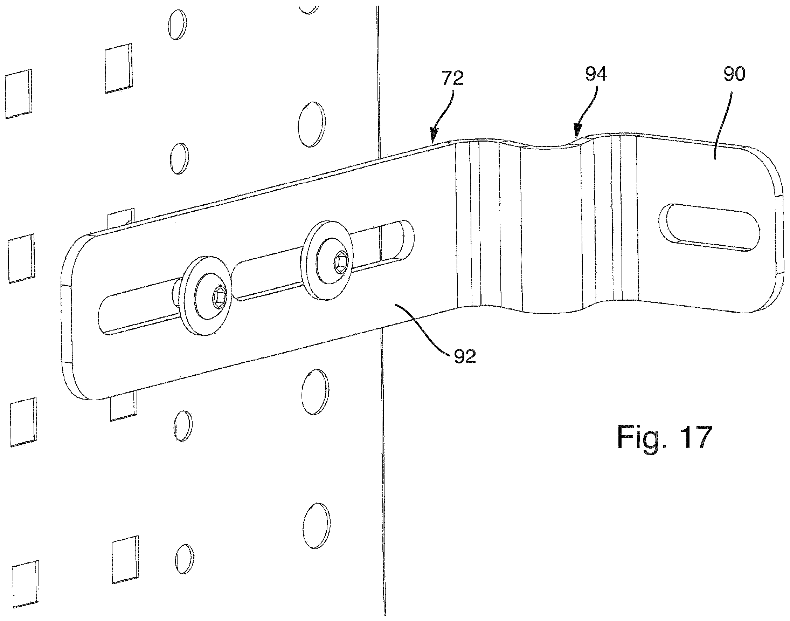

Die Darstellung der Fig. 17 zeigt eines der Befestigungselemente 72 in vergrößerter Darstellung. Das Befestigungselement 72 besteht aus einem gebogenen Blechstreifen, wobei die Befestigungsenden 90, 92 im rechten Winkel zueinander angeordnet sind. Das Befestigungsende 90 weist ein Langloch auf, das Befestigungsende 92 zwei Langlöcher. Der Verbindungsabschnitt 94 ist wellenartig ausgebildet, wobei der Blechstreifen lediglich einen Wellenberg ausbildet. Der Verbindungsabschnitt 94 bildet gleichzeitig einen Absorptionsbereich und eine plastische Verformung des Verbindungsabschnitts 94 erfolgt dadurch, dass der Verbindungsabschnitt 94 gestreckt wird.

Das Befestigungselement 72 zeichnet sich durch eine besonders einfache Herstellung aus. Speziell muss ein Blechstreifen lediglich im Verbindungsabschnitt 94 in die dargestellte wellenartige Form gebogen werden und die Befestigungsenden 90, 92 müssen im rechten Winkel zueinander angeordnet werden. Der Verbindungsabschnitt 94 muss aber nicht in mehrere Blechstreifenabschnitte unterteilt werden.

## Patentansprüche

1. Befestigungselement (14) zum Befestigen von Einbauelementen (12) in Fahrzeugen, insbesondere Regale oder Schränke, wobei das Befestigungselement (14) ein erstes Befestigungsende (20), ein zweites Befestigungsende (24) und einen Verbindungsabschnitt (26) zwischen dem ersten und dem zweiten Befestigungsende aufweist, wobei der Verbindungsabschnitt (26) wenigstens einen Absorptionsbereich (34) aufweist, der beim Überschreiten einer maximalen vordefinierten Haltebelastung zwischen dem ersten Befestigungsende (20) und dem zweiten Befestigungsende (24) nachgibt und sich verformt, wobei der Absorptionsbereich so ausgebildet ist, dass ein Verformungsweg begrenzt ist, wobei sich der Absorptionsbereich (34) beim Überschreiten der maximalen Haltebelastung wenigstens abschnittsweise plastisch verformt, wobei der Verbindungabschnitt aus zwei Blechstreifenabschnitten (40, 42) gebildet ist, die miteinander verbunden sind, **dadurch gekennzeichnet, dass** die beiden Blechstreifenabschnitte (40, 42) jeweils hakenförmig gebogen und ineinander eingehängt sind.

2. Befestigungselement nach Anspruch 1, **dadurch gekennzeichnet, dass** der Absorptionsbereich (34) wenigstens einen gebogenen Blechstreifen aufweist, wobei ein verformter, gestreckter Zustand des Blechstreifens eine Begrenzung des Verformungswegs definiert.

3. Befestigungselement nach einem der vorstehenden Ansprüche, **dadurch gekennzeichnet, dass** das Befestigungselement (14) als Blechstreifen ausgebildet ist.

4. Befestigungselement nach Anspruch 3, **dadurch gekennzeichnet, dass** der Verbindungsabschnitt im Absorptionsbereich (34) mehrfach gebogen ist.

5. Befestigungselement nach einem der vorstehenden Ansprüche, **dadurch gekennzeichnet, dass** das Befestigungselement wenigstens einen Niet (44) aufweist und dass die beiden Blechstreifenabschnitte (40, 42) mittels des wenigstens einen Niets (44) miteinander verbunden sind.

6. Befestigungselement nach wenigstens einem der vorstehenden Ansprüche, **dadurch gekennzeichnet, dass** sich der Absorptionsbereich beim Überschreiten der maximalen Haltebelastung wenigstens abschnittsweise elastisch verformt.

7. Befestigungseiement nach Anspruch 6, **dadurch gekennzeichnet, dass** der Verbindungsabschnitt im Absorptionsbereich wenigstens eine Feder und/oder einem Stoßdämpfer aufweist.

8. Einbauelement für Fahrzeuge, insbesondere Regal oder Schrank, **gekennzeichnet durch** wenigstens ein Befestigungselement (14) nach einem der vorstehenden Ansprüche zum Verbinden des Einbauelements (12) für ein Fahrzeug mit einem Rahmen und/oder einer Karosseriestruktur (10) des Fahrzeugs.

9. Fahrzeug, insbesondere Kraftfahrzeug, mit einem Einbauelement (12) im Innenraum oder Laderaum des Fahrzeugs und mit wenigstens einem Befestigungselement (14) nach einem der Ansprüche 1 bis 7, **dadurch gekennzeichnet, dass** das Einbauelement (12) mittels des wenigstens einen Befestigungselements (14) mit einem Rahmen und/oder einer Karosseriestruktur des Fahrzeugs verbunden ist.

## Claims

1. Fastening element (14) for fastening installation elements (12) in vehicles, in particular racks or cabinets, wherein the fastening element (14) has a first fastening end (20), a second fastening end (24) and a connecting portion (26) between the first and the second fastening end, wherein the connecting portion (26) has at least one absorption region (34) which, upon exceeding a maximum predefined holding load, yields and deforms between the first fastening end (20) and the second fastening end (24), wherein the absorption region is formed in such a way that a deformation travel is limited, wherein the absorption region (34) deforms plastically at least in certain portions upon exceeding the maximum holding load, wherein the connecting portion is formed from two sheet-metal strip portions (40, 42) which are connected to one another, **characterized in that** the two sheet-metal strip portions (40, 42) are each bent in the form of hooks and are hooked into one another.

2. Fastening element according to Claim 1, **characterized in that** the absorption region (34) has at least one bent sheet-metal strip, wherein a deformed, stretched state of the sheet-metal strip defines a limit of the deformation travel.

3. Fastening element according to either of the preceding claims, **characterized in that** the fastening element (14) takes the form of a sheet-metal strip.

4. Fastening element according to Claim 3, **characterized in that** the connecting portion is bent multiply in the absorption region (34).

5. Fastening element according to one of the preceding claims, **characterized in that** the fastening element has at least one rivet (44), and **in that** the two sheet-metal strip portions (40, 42) are connected to one another by means of the at least one rivet (44).

6. Fastening element according to at least one of the preceding claims, **characterized in that** the absorption region deforms elastically at least in certain portions upon exceeding the maximum holding load.

7. Fastening element according to Claim 6, **characterized in that** the connecting portion has at least one spring and/or an impact damper in the absorption region.

8. Installation element for vehicles, in particular a rack or cabinet, **characterized by** at least one fastening element (14) according to one of the preceding claims for connecting the installation element (12) for a vehicle to a frame and/or to a body structure (10) of the vehicle.

9. Vehicle, in particular motor vehicle, having an installation element (12) in the interior or loading compartment of the vehicle and having at least one fastening element (14) according to one of Claims 1 to 7, **characterized in that** the installation element (12) is connected to a frame and/or to a body structure of the vehicle by means of the at least one fastening element (14) .

## Revendications

1. Élément de fixation (14) pour la fixation d'éléments encastrables (12) dans des véhicules, notamment d'étagères ou d'armoires, l'élément de fixation (14) comportant une première extrémité de fixation (20), une deuxième extrémité de fixation (24) et une section de jonction (26) entre la première et la deuxième extrémité de fixation, la section de jonction (26) comportant au moins une zone absorbante (34) qui fléchit et se déforme en cas de dépassement d'une charge d'arrêt maximale prédéfinie entre la première extrémité de fixation (20) et la deuxième extrémité de fixation (24), la zone absorbante étant réalisée de telle sorte qu'une course de déformation est délimitée, la zone absorbante (34) se déformant au moins en partie de façon plastique en cas de dépassement de la charge d'arrêt maximale, la section de jonction étant formée de deux sections de bande de tôle (40, 42) reliées entre elles, **caractérisé en ce que** les deux sections de bande de tôle (40, 42) sont respectivement incurvées en forme de crochet et sont crochetées l'une dans l'autre.

2. Élément de fixation selon la revendication 1, **caractérisé en ce que** la zone absorbante (34) comporte au moins une bande de tôle incurvée, un état déformé tendu de la bande de tôle définissant une délimitation de la course de déformation de façon définie.

3. Élément de fixation selon l'une quelconque des revendications précédentes, **caractérisé en ce que** l'élément de fixation (14) est réalisé sous la forme d'une bande de tôle.

4. Élément de fixation selon la revendication 3, **caractérisé en ce que** la section de jonction est incurvée de multiples fois dans la zone absorbante (34).

5. Élément de fixation selon l'une quelconque des revendications précédentes, **caractérisé en ce que** l'élément de fixation comporte au moins un rivet (44) et que les deux sections de bande de tôle (40, 42) sont reliées entre elles à l'aide de l'au moins un rivet (44).

6. Élément de fixation selon au moins l'une quelconque des revendications précédentes, **caractérisé en ce que** la zone absorbante se déforme au moins en partie de façon élastique en cas de dépassement de la charge d'arrêt maximale.

7. Élément de fixation selon la revendication 6, **caractérisé en ce que** la section de jonction comporte au moins un ressort et/ou un absorbeur de chocs dans la zone absorbante.

8. Elément encastrable pour véhicules, notamment étagère ou armoire, **caractérisé par** la présence d'au moins un élément de fixation (14) selon l'une quelconque des revendications précédentes permettant de relier l'élément encastrable (12) prévu pour un véhicule à un châssis et/ou à une structure de carrosserie (10) du véhicule.

9. Véhicule, notamment véhicule automobile, avec un élément encastrable (12) prévu dans l'habitacle ou dans l'aire de chargement du véhicule et avec au moins un élément de fixation (14) selon l'une quelconque des revendications 1 à 7, **caractérisé en ce que** l'élément encastrable (12) est relié à un châssis et/ou à une structure de carrosserie du véhicule à l'aide de l'au moins un élément de fixation (14).
